# EUROPÄISCHE PATENTSCHRIFT

(11) **EP 1 481 879 B1**
(45) Veröffentlichungstag und Bekanntmachung des Hinweises auf die Patenterteilung: **12.09.2007**
(21) Anmeldenummer: 04004616.1
(22) Anmeldetag: 28.02.2004
(51) Int. Cl.: B62D 25/14

(54) **Befestigungsanordnung für ein Cockpitmodul eines Kraftfahrzeuges**
Mounting arrangement for the cockpit module of a motor vehicle
Dispositif de fixation pour un module de tableau de bord d'un véhicule automobile

(30) Priorität: 27.05.2003 DE 10323999
(43) Veröffentlichungstag der Anmeldung: 01.12.2004
(73) Patentinhaber: Dr.Ing. h.c. F. Porsche Aktiengesellschaft, 70435 Stuttgart (DE)
(72) Erfinder: Götz, Erwin, 71263 Weil der Stadt (DE); Murau, Heinz, 70439 Stuttgart (DE); Horsch, Guido, 75382 Althengstett (DE); Rambow, Jörg, 76829 Landau (DE); Hoge, Friedrich, 70839 Gerlingen (DE); Leise, Jochen, 71282 Hemmingen (DE)

(56) Entgegenhaltungen:
- WO-A-01/85529
- DE-A- 10 200 886
- DE-C- 10 010 709
- US-A- 5 082 078

## Beschreibung

Die Erfindung betrifft eine Befestigungsanordnung für ein Cockpitmodul eines Kraftfahrzeuges gem. dem Oberbegriff des Patentanspruchs 1.

Bei einem bekannten Cockpitmodul ist der Stirnwanddeckel über Befestigungsschrauben mit dem freien Ende des Pedallagerbocks verbunden. Bei der Montage des Cockpitmoduls wird einerseits der Stirnwanddeckel unter Zwischenschaltung einer Kleberaupe an die Stirnwand herangeführt und mit dieser verschraubt. Andererseits werden beide Enden des querverlaufenden Montageträgers über in Fahrzeugquerrichtung ausgerichtete Befestigungselemente (Befestigungsschrauben und Distanzelemente) an den angrenzenden A-Säulen festgelegt. Toleranzen in Fahrzeuglängsrichtung (X-Richtung) können nur in begrenztem Umfang über Langlöcher in den Seitenwangen des Montageträgers spannungsfrei kompensiert werden.

Bei der eingangs beschriebenen Anordnung erfolgt die Ausrichtung des Cockpitmoduls über die Stirnwand, das heißt, die Interieurqualität - Fugenverläufe und Übergänge im Fahrgastraum - wird durch die Fertigungstoleranzen des Rohbaus und die auftretenden Spannungen im Cockpit bestimmt. Der Fugenverlauf im Fahrgastraum ist somit nicht steuerbar. Bei ungünstigen Toleranzlagen können Verspannungen beim Einbau des Cockpitmoduls auftreten und ungleichmäßige Fugenverläufe im Fahrgastraum zwischen der Schalttafel und den angrenzenden Verkleidungsteilen lassen sich nachträglich nur schwer korrigieren.

Ein weiteres ähnliches Cockpitmodul ist im WO 01/85529 A offenbart.

Aufgabe der Erfindung ist es, eine Befestigungsanordnung für ein Cockpitmodul eines Kraftfahrzeuges so weiterzuentwickeln, daß bei einfacher prozeßsicherer Montage und unabhängig von den auftretenden Rohbautoleranzen ein sauberes Fugenbild zwischen der Schalttafel und den angrenzenden Verkleidungsteilen (insbes. A-Säulenverkleidung) im Fahrgastraum geschaffen wird. Andererseits soll im Bereich der Stirnwand eine gute Abdichtung zwischen dem Fahrgastraum und dem vorgelagerten Naßraum sichergestellt sein.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die Ausrichtung des Cockpitmoduls zu den beiden A-Säulen und durch die zwischengeschaltete, in X-Richtung wirkende Einstellvorrichtung für den Stirnwanddeckel eine einfache prozeßsichere Montage für das Cockpitmodul geschaffen wird. Über Anschlagteile an beiden A-Säulen wird der Montageträger mit der Schalttafel in X- über eine Auflage in Z- und über eine Positionierungsbohrung in Y-Richtung lagerichtig zu den angrenzenden Verkleidungsteilen positioniert und wird so ausgerichtet, daß gleichmäßige saubere Fugenbilder zwischen der Schalttafel und den angrenzenden Verkleidungsteilen (A-Säulenverkleidungen, Türverkleidungen und Mittelkonsole) sichergestellt sind.

Durch die zwischengeschaltete Einstellvorrichtung zwischen dem Pedallagerbock und dem Stirnwanddeckel lassen sich selbst hohe Fertigungstoleranzen des Rohbaus in X in einfacher Weise ausgleichen. Y und Z definieren sich über die Positionierungen. Dabei können alle auftretenden Kräfte im Betrieb übertragen werden.

Die Einstellvorrichtung weist einen einfachen Aufbau auf, gewährleistet eine prozeßsichere Montage des Cockpitmoduls und ist leicht einstellbar. Vorteilhafterweise wird die Einstellvorrichtung durch zumindest einen mit dem Pedallagerbock verbundenen Schweißbolzen gebildet, wobei auf ein Außengewinde des Schweißbolzens eine verlagerbare den Stirnwanddeckel tragende Überwurfmutter aufgedreht ist.

Durch die Trennung der Abdichtung von Gewinde und Durchgangsloch von der Verschraubung an der Einstellvorrichtung wird eine einwandfreie Abdichtung zwischen dem Fahrgastraum und dem vorgelagerten Naßraum erzielt. Dabei kann die Gewindeabdichtung auch in der Verschraubung sichergestellt werden.

Ein Ausführungsbeispiel der Erfindung wird im folgenden näher erläutert.
Es zeigen
- Fig. 1: eine perspektivische Teilansicht von schräg hinten auf ein Kraftfahrzeug mit einem eingesetzten Cockpitmodul,
- Fig. 2: eine schematische Draufsicht auf eine Befestigungsanordnung für das Cockpitmodul,
- Fig. 3: einen Schnitt nach der Linie III-III der Fig. 2 in größerer Darstellung und um 90° gedreht,

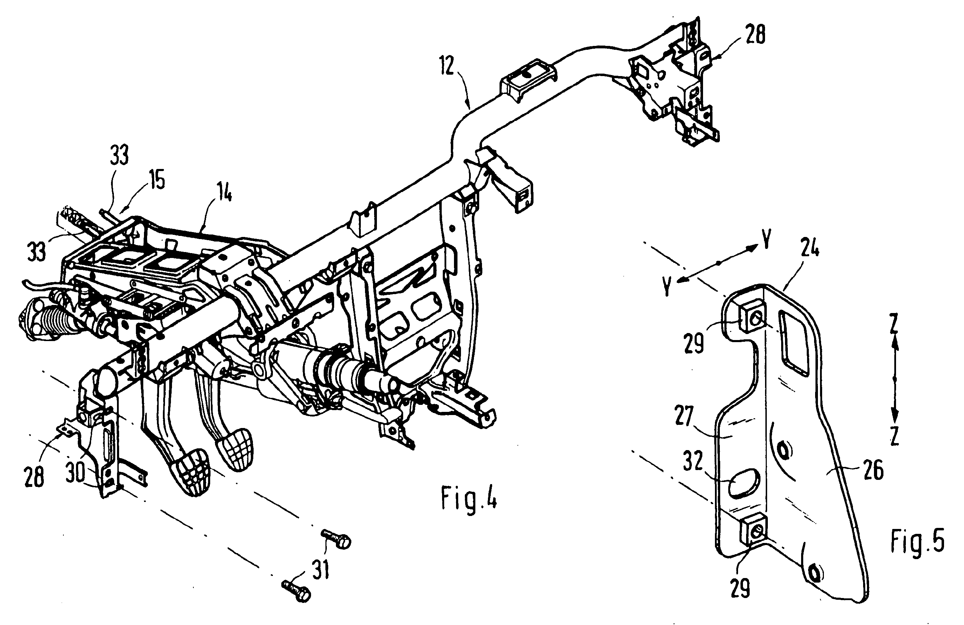

- Fig. 4: den Montageträger mit dem Pedallagerbock und dem Stirnwanddeckel in Explosionsdarstellung.

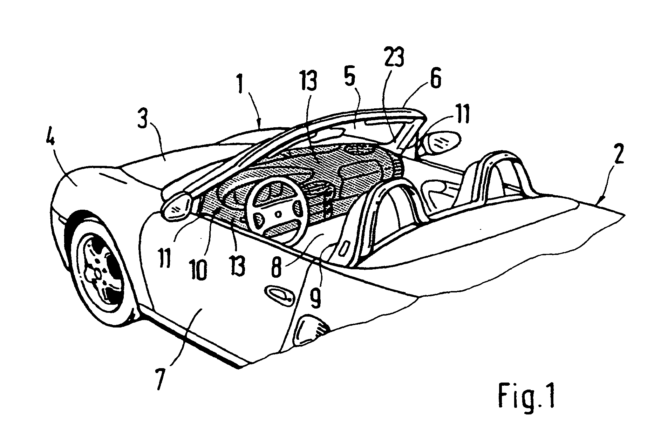

Das in Fig. 1 dargestellte, durch einen Personenkraftwagen gebildete Kraftfahrzeug 1 umfaßt einen feststehenden Aufbau 2, der im dargestellten Bereich einen vorderen Deckel 3, seitliche Kotflügel 4, einen eine Windschutzscheibe 5 aufnehmenden Windschutzscheibenrahmen 6 und seitliche Türen 7 umfaßt. Innerhalb eines Fahrgastraumes 8 sind Sitze 9 und ein durch eine vorgefertigte Baueinheit gebildetes Cockpitmodul 10 angeordnet. Das unterhalb der Windschutzscheibe 5 vorgesehene Cockpitmodul 10 erstreckt sich zwischen den beiden gegenüberliegenden A-Säulen 11 des Aufbaus 2.

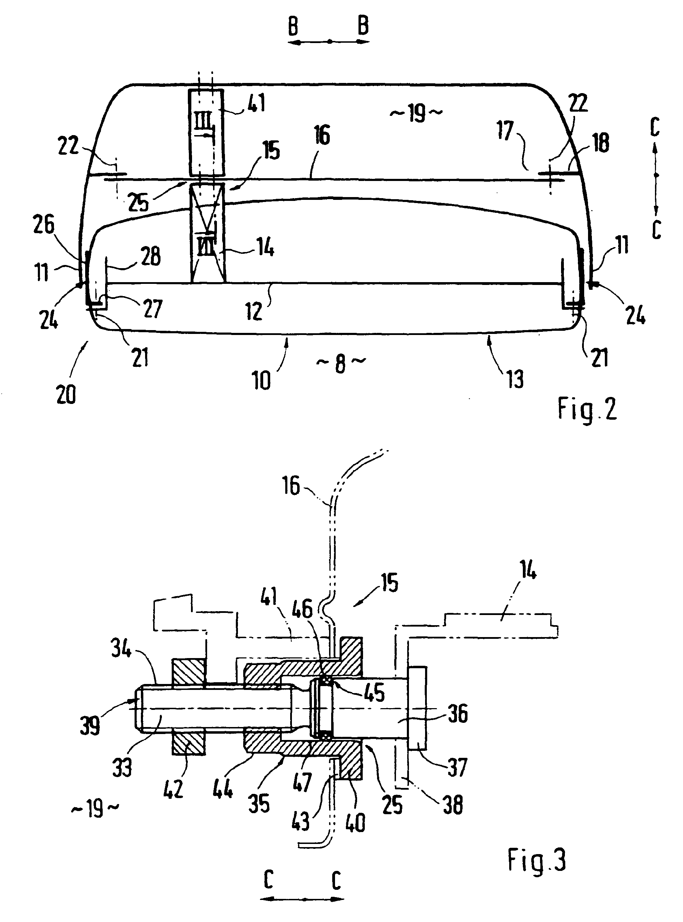

Das Cockpitmodul 10 umfaßt im wesentlichen einen sich in Fahrzeugquerrichtung B-B erstreckenden Montageträger 12, der die komplette Schalttafel 13 samt Verkabelung, eine Heiz- bzw. Klimaanlage, eine Lenkung sowie weitere nicht näher angeführte Bauteile aufnimmt. Starr mit dem Montageträger 12 verbunden z.B. durch Schweißen ist ein Pedallagerbock 14, dessen freies dem Montageträger 12 abgekehrtes Ende 15 mit einem Stirnwanddeckel 16 in Wirkverbindung steht. Der Stirnwanddeckel 16 verschließt bei montiertem Cockpitmodul 10 zumindest eine Öffnung 17 einer feststehenden querverlaufenden Stirnwand 18 des Aufbaus 2, die den Fahrgastraum 8 von einem vorgelagerten Naßraum 19 (Wasserkasten) trennt. In Fig. 2 ist schematisch eine Befestigungsanordnung 20 für das Cockpitmodul 10 dargestellt. Der Montageträger 12 ist über erste Schraubverbindungen 21 an beiden gegenüberliegenden A-Säulen 11 befestigt und der Stirnwanddeckel 16 ist über zweite Schraubverbindungen 22 an der Stirnwand 18 festgelegt.

Damit einerseits ein sauberer Fugenverlauf im Fahrgastraum 8 zwischen der Schalttafel 13 und den angrenzenden Verkleidungen (insbes. A-Säulenverkleidungen 23) gewährleistet ist und andererseits hohe karosserieseitige Fertigungstoleranzen ausgleichbar sind, ist vorgesehen, daß an beiden A-Säulen 11 je ein Anschlagteil 24 zur Festlegung des Montagequerträgers 12 in X-Richtung angeordnet ist und daß zwischen dem Pedallagerbock 14 und dem Stirnwanddeckel 16 eine Einstellvorrichtung 25 zwischengeschaltet ist, mittels der Rohbau- und Fertigungstoleranzen in X-Richtung kompensierbar sind.

Beide Anschlagteile 24 werden mittels einer nicht näher dargestellten Montagelehre lagerichtig an den angrenzenden A-Säulen 11 positioniert und durch eine Schraub- oder Schweißverbindung an den A-Säulen 11 befestigt. Jedes winkelförmig ausgebildete Anschlagteil 24 umfaßt einen ersten, etwa in Fahrzeuglängsrichtung verlaufenden Schenkel 26, der an der benachbarten Innenseite der A-Säule 11 aufliegt und dort befestigt ist. Ferner weist jedes Anschlagteil 24 einen zweiten sich in Fahrzeugquerrichtung erstreckenden Schenkel 27 auf, an dem eine Seitenwange 28 des Montageträgers 12 bei montierten Cockpitmodul 10 aufliegt und dort mittels der ersten Schraubverbindung 21 in Lage gehalten ist. Die erste Schraubverbindung 21 wird durch am Schenkel 27 vorgesehene Schweißmuttern 29 gebildet, in die durch vorgelagerte Öffnungen 30 in Fahrzeuglängsrichtung ausgerichtete Befestigungsschrauben 31 eindrehbar sind. Im Ausführungsbeispiel sind an jeder A-Säule 11 zwei übereinanderliegend angeordnete Schraubverbindungen 21 zur Festlegung des Montageträgers 12 vorgesehen. Zwischen den übereinanderliegenden Schraubverbindungen 21 ist am zweiten Schenkel 27 eine Positionieröffnung 32 vorgesehen, in die ein am Handlingsgerät für das Cockpitmodul 10 angebrachter Positionierbolzen bei der Montage des Cockpitmoduls 10 eingreift und somit das Cockpitmodul 10 in Z-Richtung (Fahrzeughöhenrichtung) festlegt. Die Positionieröffnung 32 wird durch ein sich in Fahrzeugquerrichtung erstreckendes Langloch gebildet, so daß das Cockpitmodul 10 in definiertem Umfang in Y-Richtung (Fahrzeugquerrichtung) durch eine definierte Positionierungsbohrung gegenüber den angrenzenden Verkleidungsteilen ausrichtbar ist, um gleichmäßige Fugenverläufe sicherzustellen. In Z erfolgt die Ausrichtung durch eine definierte Ausrichtung. Der Montagequerträger 12 kann über weitere herkömmliche Befestigungen am Mitteltunnel und an einem unteren Windlaufquerträger festgelegt werden (nicht näher dargestellt).

Der Stirnwanddeckel 16 wird bei der Montage vom Fahrgastraum 8 her in Richtung Stirnwand 16 bewegt und er wird unter Zwischenschaltung einer Kleberaupe auf die Stirnwand 16 aufgesetzt. Die zweiten Schraubverbindungen 22 werden im Ausführungsbeispiel durch am Stirnwanddeckel 16 angebrachte Schweißmuttern gebildet, in die vom vorgelagerten Naßraum 19 her Befestigungsschrauben eingedreht sind (nicht näher dargestellt).

Die Einstellvorrichtung 25 zwischen dem Pedallagerbock 14 und dem Stirnwanddeckel 16 wird im Ausführungsbeispiel durch zumindest einen mit dem Pedallagerbock 14 verbundenen und von diesem weggeführten Schweißbolzen 33 gebildet, der ein Außengewinde 34 umfaßt, wobei auch das Außengewinde 34 eine verlagerbare Überwurfmutter 35 aufgedreht ist, die den Stirnwanddeckel 16 trägt. Der zumindest eine Schweißbolzen 33 ist durch eine Öffnung 36 des Pedallagerbocks 14 hindurchgeführt und stützt sich mit einem endseitigen Bund 37 an einer endseitigen querverlaufenden Wand 38 des Pedallagerbocks 14 ab. Das freie Ende 39 des Schweißbolzens 33 ragt in den Naßraum 19 hinein. Der Stirnwanddeckel 16 ist zwischen einem endseitigen radialen Kragen 40 der Überwurfmutter 35 und einem gegenüberliegenden Zwischenstück 41 klemmend gehalten. Das Zwischenstück 41 wird durch eine Kontermutter 42 gegen die dem Kragen 40 abgekehrte Seite des Stirnwanddeckels 16 gedrückt. Zwischen dem radialen Kragen 40 und der angrenzenden Seite des Stirnwanddeckels 16 ist ein Dichtring 43 zwischengeschaltet. Die Überwurfmutter 35 weist auf der dem Pedallagerbock 14 abgekehrten Seite einen Außenmehrkant 44 zur Verstellung mittels eines Hilfswerkzeuges auf.

Getrennt von der Befestigung des Stirnwanddeckels 16 ist zwischen der Überwurfmutter 35 und dem Schweißbolzen 33 eine Abdichtung 45 vorgesehen. Diese wird z.B. durch einen auf den Schweißbolzen 33 aufgesetzten 0-Ring 46 gebildet, der sich mit seiner Außenseite an einer Innenseite einer hohlzylindrischen Aufnahme 47 der Überwurfmutter 35 dichtend abstützt. Anstelle des 0-Ringes 46 könnte auch zwischen dem Außengewinde des Schweißbolzens 33 und einem Innengewinde der Überwurfmutter 35 eine Abdichtung 45 vorgesehen sein, die einen Wassereintritt von der Naßzelle 19 in den Fahrgastraum 8 vermeidet.

Im Ausführungsbeispiel umfaßt die Einstellvorrichtung 25 zwei mit Abstand zueinander angeordnete parallel verlaufende Schweißbolzen 33, wobei auf jeden Schweißbolzen 33 eine separate Überwurfmutter 35 aufgedreht ist.

Mittels der den Stirnwanddeckel 16 tragenden Überwurfmutter 35 kann der Stirnwanddeckel 16 in X-Richtung (Fahrzeuglängsrichtung C-C) relativ zur Stirnwand 18 verlagert werden und somit können hohe karosserieseitige Fertigungstoleranzen in einfacher, prozeßsicherer Weise ausgeglichen werden. Die Einstellvorrichtung 25 könnte auch durch ein mit dem Pedallagerbock 14 verbundenes Rohr mit einem Außengewinde gebildet werden, auf das eine den Stirnwanddeckel 16 tragende Überwurfmutter 35 oder ein weiteres den Stirnwanddeckel 16 aufnehmendes, in Längsrichtung verlagerbares Rohr aufgesetzt ist (nicht näher dargestellt).

## Patentansprüche

1. Befestigungsanordnung (20) für ein Cockpitmodul (10) eines Kraftfahrzeuges (1) mit einem querverlaufenden Montageträger (12), einem starr am Montageträger (12) befestigten Pedallagerbock (14) und einem mit dem Pedallagerbock (14) verbundenen Stirnwanddeckel (16), wobei der Montageträger (12) über erste, sich in Fahrzeuglängsrichtung (X-Richtung) erstreckende Schraubverbindungen (21) an beiden angrenzenden gegenüberliegenden A-Säulen (11) befestigt ist und der Stirnwanddeckel (16) über zweite Schraubverbindungen (22) an der Stirnwand (18) festgelegt ist und dass zwischen dem Pedallagerbock (14) und dem Stirnwanddeckel (16) eine Einstellvorrichtung (25) zwischengeschaltet ist, mittels der Rohbau- und Fertigungstoleranzen in Fahrzeuglängsrichtung (X-Richtung) ausgleichbar sind, **dadurch gekennzeichnet, daß** an beiden A-Säulen (11) jeweils ein Anschlagteil (24) zur Festlegung des Montageträgers (12) in Fahrzeuglängsrichtung (X-Richtung) angeordnet ist und daß die sich in Fahrzeuglängsrichtung erstreckende Einstellvorrichtung (25) zumindest einen mit dem Pedallagerbock (14) verbundenen und von diesem weggeführten Schweißbolzen (33) mit einem Außengewinde (34) umfasst, wobei auf das Außengewinde (34) des Schweißbolzens (33) eine verlagerbare, den Stirnwanddeckel (16) tragende Überwurfmutter (35) aufgedreht ist und dass der Stirnwanddeckel (16) zwischen einem endseitigen radialen Kragen (40) der Überwurfmutter (35) und einem gegenüberliegenden Zwischenstück (41) klemmend gehalten ist, wobei das Zwischenstück (41) durch eine Kontermutter (42) gegen die dem Kragen (40) abgekehrte Seite des Stirnwanddeckels (16) gedrückt wird.

2. Befestigungsanordnung nach Anspruch 1, **dadurch gekennzeichnet, dass** der zumindest eine Schweißbolzen (33) durch eine Öffnung des Pedallagerbocks (14) hindurchgeführt ist und sich mit einen endseitigen Bund (37) an einer Wand (38) des Pedallagerbocks (14) abstützt und dass das freie Ende (39) des Schweißbolzens (33) dem vorgelagerten Nassraum (19) zugewandt ist.

3. Befestigungsanordnung nach einem der vorangegangenen Ansprüche, **dadurch gekennzeichnet, dass** zwischen dem radialen Kragen (40) und der angrenzenden Seite des Stirnwanddeckels (16) ein Dichtring (43) zwischengeschaltet ist.

4. Befestigungsanordnung nach einem der vorangegangenen Ansprüche, **dadurch gekennzeichnet, dass** die Überwurfmutter (35) auf der dem Pedallagerbock (14) abgekehrten Seite einen Außenmehrkant (44) zur Verstellung mittels eines Hilfswerkzeuges aufweist.

5. Befestigungsanordnung nach einem der vorangegangenen Ansprüche, **dadurch gekennzeichnet, dass** getrennt von der Befestigung des Stirnwanddeckels (16) zwischen der Überwurfmutter (35) und dem Schweißbolzen (33) eine Abdichtung (45) vorgesehen ist.

6. Befestigungsanordnung nach Anspruch 5, **dadurch gekennzeichnet, dass** die Abdichtung (45) durch einen auf den Schweißbolzen (33) aufgesetzten O-Ring (46) gebildet wird, der sich mit seiner Außenseite an der Innenseite einer hohlzylindrischen Aufnahme (47) der Überwurfmutter (35) dichtend abstützt.

7. Befestigungsanordnung nach einem der vorangegangenen Ansprüche, **dadurch gekennzeichnet, dass** die Einstellvorrichtung (25) zwei mit Abstand zueinander angeordnete parallel verlaufende Schweißbolzen (33) umfaßt, wobei auf jeden Schweißbolzen (33) eine separate Überwurfmutter (35) aufgedreht ist.

8. Befestigungsanordnung nach Anspruch 1, **dadurch gekennzeichnet, dass** mittels einer Montagelehre an beiden A-Säulen (11) jeweils ein Anschlagteil (24) positioniert und festgelegt ist, an dem jeweils eine endseitige Seitenwange (28) des querverlaufenden Montageträgers (12) befestigbar ist.

9. Befestigungsanordnung nach Anspruch 8, **dadurch gekennzeichnet, dass** an einem in Fahrzeugquerrichtung verlaufenden Schenkel (27) jedes Anschlagteils (24) Öffnungen (30) und dahinterliegend angeordnete Schweißmuttern (29) vorgesehen sind, in die in Fahrzeuglängsrichtung ausgerichtete Befestigungsschrauben (31) zum Festlegen des Montagegträgers (12) eindrehbar sind.

10. Befestigungsanordnung nach einem der vorangegangenen Ansprüche, **dadurch gekennzeichnet, dass** am querverlaufenden Schenkel (27) des Anschlagteils (24) eine Positionieröffnung (32) vorgesehen ist, in die ein am Handlingsgerät für das Cockpitmodul (10) angebrachter Positionierbolzen bei der Montage des Cockpitmoduls (10) eingreift und somit das Cockpitmodul (10) in Fahrzeughöhenrichtung (Z-Richtung) festlegt.

11. Befestigungsanordnung nach einem der vorangegangenen Ansprüche, **dadurch gekennzeichnet, dass** die Positionieröffnung (32) durch ein sich in Fahrzeugquerrichtung erstreckendes Langloch gebildet wird, so daß das Cockpitmodul (10) in Fahrzeugquerrichtung (Y-Richtung) gegenüber den angrenzenden Verkleidungsteilen (23) ausrichtbar ist.

## Claims

1. A fastening arrangement (20) for a cockpit module (10) of a motor vehicle (1), with a transversely extending assembly carrier (12), a pedal bracket (14) rigidly fixed to the assembly carrier (12), and an end-wall cover (16) connected to the pedal bracket (14), wherein the assembly carrier (12) is fixed to the two adjacent, opposing A-pillars (11) by means of first screw connections (21) extending in the vehicle longitudinal direction (X direction), and the end-wall cover (16) is secured to the end wall (18) by means of second screw connections (22), and wherein an adjusting device (25), by means of which bodyshell and manufacturing tolerances in the vehicle longitudinal direction (X direction) can be compensated for, is interposed between the pedal bracket (14) and the end-wall cover (16), **characterised in that** a stop part (24) for securing the assembly carrier (12) in the vehicle longitudinal direction (X direction) is arranged on each of the two A-pillars (11), and **in that** the adjusting device (25) extending in the vehicle longitudinal direction comprises at least one weld bolt (33) which is connected to the pedal bracket (14) and extends away therefrom and is provided with an external thread (34), wherein a displaceable - union nut (35), which carries the end-wall cover (16), is screwed onto the external thread (34) of the weld bolt (33), and **in that** the end-wall cover (16) is held clamped between an end radial collar (40) of the union nut (35) and an opposing intermediate piece (41), wherein the intermediate piece (41) is pressed by a locknut (42) against the side of the end-wall cover (16) remote from the collar (40).

2. A fastening arrangement according to claim 1, **characterised in that** the at least one weld bolt (33) is inserted through an opening in the pedal bracket (14) and is supported by an end collar (37) against a wall (38) of the pedal bracket (14), and **in that** the free end (39) of the weld bolt (33) faces the wet space (19) arranged in front.

3. A fastening arrangement according to either one of the preceding claims, **characterised in that** a sealing ring (43) is interposed between the radial collar (40) and the adjacent side of the end-wall cover (16).

4. A fastening arrangement according to any one of the preceding claims, **characterised in that**, on the side remote from the pedal bracket (14), the union nut (35) has an external polygon (44) for adjustment by means of an auxiliary tool.

5. A fastening arrangement according to any one of the preceding claims, **characterised in that** a seal (45) is provided between the union nut (35) and the weld bolt (33) separately from the fastening of the end-wall cover (16).

6. A fastening arrangement according to claim 5, **characterised in that** the seal (45) is formed by an O-ring (46) which is placed onto the weld bolt (33) and is supported by its outer surface against the inner surface of a hollow cylindrical receiver (47) in the union nut (35) so as to provide a seal.

7. A fastening arrangement according to any one of the preceding claims, **characterised in that** the adjusting device (25) comprises two weld bolts (33) extending in a parallel manner and arranged with mutual spacing, wherein a separate union nut (35) is screwed onto each weld bolt (33).

8. A fastening arrangement according to claim 1, **characterised in that** a stop part (24) is positioned on each of the two A-pillars (11) and is secured thereto by means of an assembly jig, and an end side wall (28) of the transversely extending assembly carrier (12) is fixable to each stop part (24).

9. A fastening arrangement according to claim 8, **characterised in that** openings (30) and weld nuts (29) arranged therebehind are provided on an arm (27) of each stop part (24), into which weld nuts (29) fastening screws (31) extending in the vehicle longitudinal direction can be screwed for securing the assembly carrier (12), said arm (27) extending in the vehicle transverse direction.

10. A fastening arrangement according to any one of the preceding claims, **characterised in that** a positioning opening (32) is provided in the transversely extending arm (27) of the stop part (24), in which positioning opening (32) a positioning bolt, which is attached to the handling apparatus for the cockpit module (10), engages during the process of mounting the cockpit module (10) and thereby secures the cockpit module (10) in the vehicle vertical direction (Z direction).

11. A fastening arrangement according to any one of the preceding claims, **characterised in that** the positioning opening (32) is formed by a slot extending in the vehicle transverse direction so that the cockpit module (10) is alignable in the vehicle transverse direction (Y direction) in relation to the adjacent trim parts (23).

## Revendications

1. Dispositif de fixation (20) pour un module de cockpit (10) d'un véhicule automobile (1), comportant une traverse de montage (12) orientée transversalement, un support des paliers de pédales (14), fixé de manière rigide contre la traverse de montage (12), et un couvercle de paroi frontale (16), assemblé au support des paliers de pédales (14), la traverse de montage (12) étant fixée contre les deux colonnes A (11) adjacents, situés face à face, par l'intermédiaire de premiers assemblages vissés (21) orientés dans le sens longitudinal du véhicule (direction X), et le couvercle de paroi frontale (16) étant fixé contre la paroi frontale (18) par l'intermédiaire de deuxièmes assemblages vissés (22), et entre le support des paliers de pédales (14) et le couvercle de paroi frontale (16) étant intercalé un dispositif de réglage (25), au moyen duquel peuvent être compensées dans le sens longitudinal du véhicule (direction X) les tolérances de la caisse et les tolérances de fabrication, **caractérisé en ce que** sur chacun des deux colonnes A (11) est montée une pièce de butée (24) pour la fixation de la traverse de montage (12) dans le sens longitudinal du véhicule (direction X) et **en ce que** le dispositif de réglage (25), orienté dans le sens longitudinal du véhicule, comporte au moins un boulon soudé (33), qui est assemblé au support des paliers de pédales (14) et est guidé en s'écartant de celui-ci et qui est muni d'un filetage extérieur (34), un écrou d'accouplement (35) amovible et supportant le couvercle de paroi frontale (16) étant vissé sur le filetage extérieur (34), et **en ce que** le couvercle de paroi frontale (16) est maintenu en position bloquée entre un collet radial (40) frontal de l'écrou d'accouplement (35) et un élément intermédiaire (41) opposé, l'élément intermédiaire (41) étant poussé par un contre-écrou (42) contre la face du couvercle de paroi frontale (16), opposée au collet (40).

2. Dispositif de fixation selon la revendication 1, **caractérisé en ce que** ledit au moins un boulon soudé (33) est guidé à travers un orifice du support des paliers de pédales (14) et prend appui avec une bride (37) frontale contre une paroi (38) du support des paliers de pédales (14), et **en ce que** l'extrémité libre (39) du boulon soudé (33) est orientée vers l'espace humide (19) situé en amont.

3. Dispositif de fixation selon l'une quelconque des revendications précédentes, **caractérisé en ce qu'**une bague d'étanchéité (43) est intercalée entre le collet radial (40) et la face adjacente du couvercle de paroi frontale (16).

4. Dispositif de fixation selon l'une quelconque des revendications précédentes, **caractérisé en ce que** l'écrou d'accouplement (35), sur la face opposée au support des paliers de pédales (14), comporte une saillie polygonale (44) pour le réglage au moyen d'un outil auxiliaire.

5. Dispositif de fixation selon l'une quelconque des revendications précédentes, **caractérisé en ce que**, entre l'écrou d'accouplement (35) et le boulon soudé (33), il est prévu une garniture d'étanchéité (45) séparée de la fixation du couvercle de paroi frontale (16).

6. Dispositif de fixation selon la revendication 5, **caractérisé en ce que** la garniture d'étanchéité (45) est formée par un joint torique (46), qui est posé sur le boulon soudé (33) et qui s'appuie de manière étanche avec sa face extérieure contre une face intérieure d'un logement (47) cylindrique creux de l'écrou d'accouplement (35).

7. Dispositif de fixation selon l'une quelconque des revendications précédentes, **caractérisé en ce que** le dispositif de réglage (25) comporte deux boulons soudés (33), disposés parallèlement à distance l'un de l'autre, un écrou d'accouplement (35) séparé étant vissé sur chaque boulon soudé (33).

8. Dispositif de fixation selon la revendication 1, **caractérisé en ce que** respectivement une pièce de butée (24) est positionnée au moyen d'un gabarit de montage sur les deux colonnes A (11) et est fixée à ceux-ci, respectivement une joue latérale (28) à l'extrémité de la traverse de montage (12) étant apte à être fixée contre ladite pièce de butée.

9. Dispositif de fixation selon la revendication 8, **caractérisé en ce que** contre une branche (27), orientée dans le sens transversal du véhicule, de chaque pièce de butée (24) sont prévus des orifices (30) et des écrous soudés (29), qui sont disposés derrière ces derniers et dans lesquels peuvent être vissées des vis de fixation (31), orientées dans le sens longitudinal du véhicule et destinées à la fixation de la traverse de montage (12).

10. Dispositif de fixation selon l'une quelconque des revendications précédentes, **caractérisé en ce que** sur la branche (27), orientée dans le sens transversal, est prévu un orifice de positionnement (32), dans lequel, lors du montage du module de cockpit (10), s'engage un boulon de positionnement, posé sur le dispositif de manutention du module de cockpit (10), et qui fixe donc le module de cockpit (10) dans le sens vertical du véhicule (direction Z).

11. Dispositif de fixation selon l'une quelconque des revendications précédentes, **caractérisé en ce que** l'orifice de positionnement (32) est formé par un trou oblong, orienté dans le sens transversal du véhicule, de telle sorte que le module de cockpit (10) peut être aligné dans le sens transversal du véhicule (direction Y) par rapport aux pièces d'habillage (23) adjacentes.
